## Europäisches Patentamt

## European Patent Office
## Office européen des brevets

(11) Veröffentlichungsnummer: **0 012 116**
A1

(12) **EUROPÄISCHE PATENTANMELDUNG**

(21) Anmeldenummer: **79810168.9**

(22) Anmeldetag: **28.11.79**

(51) Int. Cl.³: **C 08 L 67/00**
**C 08 J 3/22**

(30) Priorität: 04.12.78 US 966439

(43) Veröffentlichungstag der Anmeldung:
**11.06.80 Patentblatt 80·12**

(84) Benannte Vertragsstaaten:
**BE CH DE FR GB IT NL**

(71) Anmelder: **CIBA-GEIGY AG**
**Patentabteilung Postfach**
**CH-4002 Basel(CH)**

(72) Erfinder: **Ferrill, Jr., Richard Milledge**
**44 Sheridan Street**
**Glens'Falls, New York(US)**

(54) **Feinteilige Pigmentzusammensetzungen.**

(57) Es werden pigmentierte Zusammensetzungen beschrieben, die in Oelharzbindemittelsystemen leicht dispergierbar sind. Die Zusammensetzungen bestehen aus 25 bis 95 Gew.-% Pigment und 5 bis 75 Gew.-% gewisser wasserunlöslicher, zerreibbarer thermoplastischer Polyesterharze mit einer Hydroxylzahl von mindestens 50 mg KOH pro Gramm und einem Ring- und Kugel-Erweichungspunkt von mindestens 60°C. Besonders bevorzugte Polyesterharze sind die Kondensationsprodukte einer aromatischen Dicarbonsäure oder deren Anhydrid oder Ester, einer aromatischen Monocarbonsäure und eines aliphatischen Polyols mit mindestens drei Hydroxymethylgruppen.

EP 0 012 116 A1

Vorliegende Erfindung betrifft leicht dispergierbare feste Farben, die in weiten Grenzen mit Oelharzbindemittelsystemen verträglich sind, und insbesondere feinteilige, nicht zusammenbackende Pigmentzusammensetzungen, die in technischen Oelharzbindemitteltypen leicht dispergierbar sind und damit farbige Filme oder Ueberzüge von ausgezeichnetem Glanz, ausgezeichneter Härte und Dauerhaftigkeit liefern.

Es ist bekannt, dass man Pigmente mit organischen Substanzen nachbehandeln kann, um die Oberflächeneigenschaften der Pigmente zu verändern. Substanzen, die bereits vorgeschlagen wurden, schliessen unter anderem flüssige, nicht-trocknende fettsäuremodifizierte Alkydharze (U.S. Patentschriften 2 479 836, Hoback u.a., und 3 728 142, Rudolph u.a.), Diglykolterephthalate oder lineare Oligomere von Terephthalsäure und Aethylenglykol (U.S. Patentschrift 3 607 335, Belde u.a.), niedrigschmelzende Polylactone mit Hydroxylendgruppen (U.S. Patentschrift 3 754 956, Durrant u.a.) und viskose, sich von Trimellithsäure und einem Fettalkohol oder einem Fettsäureester mit Hydroxylendgruppe ableitende Carbonsäureester mit Säurezahlen bis etwa 140 (U.S. Patentschrift 4 028 128, Robertson) ein. Mit mehr als etwa 10 Gew.-%, bezogen auf das Pigment, der obigen flüssigen, öligen oder viskosen Harze nachbehandelte Pigmente sind klebrig und zusammenbackend und erfordern spezielle Handhabungs- und Lagerungsmethoden. Ferner sind die sich ergebenden Pigmentzusammensetzungen mit den sehr mannigfaltigen, zur Zeit handelsüblichen Oelharzbindemitteln nicht genügend verträglich, um sich gewerblich weithin durchzusetzen, und sind daher von begrenzter Nützlichkeit.

Die Verwendung flüssiger Pigmentdispersionen als Färbemittel für Anstriche und Druckfarben ist ebenfalls bekannt, und Stansfield u.a. beschreiben in der U.S. Patentschrift 3 778 287 Dispersionen anorganischer Pigmente, Farblacke oder Toner in organischen Flüssigkeiten, die sich von gewissen hydroxylhaltigen, gesättigten oder un-

- 3 -

gesättigten aliphatischen Carbonsäuren ableitende Polyester mit Säurezahlen bis 100 darin gelöst enthalten.
Flüssige Färbemittel bieten zwar den deutlichen Vorteil,
sich leichter in das anzufärbende Medium einarbeiten zu
lassen als Trockenpigmente, aber ihre gewerbliche Bedeutung ist wegen der Probleme bei der Handhabung und Lagerung möglicherweise gefährlicher flüssiger Chemikalien
stark eingeschränkt. Vom Standpunkt der Wirtschaftlichkeit und Sicherheit ist es deshalb wünschenswert,
die Färbemittel in einer trockenen, lagerstabilen Form
zu haben, die in sehr mannigfaltigen Ueberzugsmedien
ohne Beeinträchtigung irgendeiner der gewünschten Eigenschaften der damit erzeugten Ueberzüge leicht dispergierbar ist.

Erfindungsgemäss wurde nun gefunden, dass feste
feinteilige Pigmentzusammensetzungen, welche die obigen
Ziele erfüllen, in stabiler, nicht zusammenbackender Form
erzeugt werden können und dass solche Zusammensetzungen
in lufttrocknenden, Einbrenn- und heisshärtbaren Oelharzbindemittelsystemen ausgezeichnete Dispergierbarkeitseigenschaften aufweisen und dabei eingefärbte Filme von
ausgezeichnetem Glanz, ausgezeichneter Härte und Dauerhaftigkeit liefern. Gegenstand vorliegender Erfindung
ist dementsprechend eine feste, feinteilige Pigmentzusammensetzung, die in Oelharzbindemittelsystemen leicht dispergierbar ist und aus 25 bis 95 Gew.-% mindestens eines
Pigments und aus 5 bis 75 Gew.-% mindestens eines wasserunlöslichen, zerreibbaren thermoplastischen Polyesterharzes mit einer Hydroxylzahl von mindestens 50 mg
KOH/Gramm Harz und einem Ring- und Kugel-Erweichungspunkt
von mindestens 60°C besteht. Bevorzugte erfindungsgemässe Zusammensetzungen sind Pigmentkonzentrate, die 30
bis 85 % und besonders bevorzugt 35 bis 75 % Pigment,
10 bis 70 % und besonders bevorzugt 15 bis 65 % Polyesterharz und etwa 1 bis etwa 15 % und besonders bevorzugt
etwa 3 bis etwa 10 % eines kationen-aktiven Tensids bzw.
Tensidkombination enthalten.

- 4 -

Erfindungsgemäss infragekommende Pigmente sind sämtliche festen, üblicherweise in der Industrie zur Anfärbung von Anstrichen, Druckfarben, oder Kunststoffen verwendeten Färbemittel. Dabei sind farbige anorganische und organische Primärpigmente, Verschnittpigmente, metallische Pigmente, die verschiedenen feinverteilten Gas- und Ofenrusse und dergleichen eingeschlossen. Die Pigmente können in getrockneter stückiger Form, als nasser Kuchen, als Aufschlämmung des Pigments in Wasser oder einem geeigneten organischen Lösungsmittel oder als die bei ihrer Synthese erhaltene Pigmentaufschlämmung vorliegen. Wo möglich werden Presskuchen bevorzugt, da diese das Zusammenbacken vermeiden, welches üblicherweise während der Trocknung des Pigments eintritt. Typische Pigmente umfassen die organischen Pigmente wie Diarylidgelb-, Phthalocyaninblau- und -grün-, Chinacridonrot- und -violett- und Dioxazinviolettpigmente, Russ und dergleichen sowie anorganische Pigmente wie die Cadmiumrot- und -gelb- und Bleichromatfarben, einschliesslich sowohl reinen Bleichromats als auch fester Lösungen, die Bleichromat und Bleisulfat und /oder Bleimolybdat enthalten, Eisenoxydgelb- und -rotpigmente, Titandioxyd und dergleichen.

Die erfindungsgemäss eingesetzten Polyesterharze sind wasserunlösliche, nicht-kristalline thermoplastische Polymere, die bei Raumtemperatur zerreibbar sind, einen Ring- und Kugel-Erweichungspunkt über etwa 60°C, vorzugsweise von etwa 65° bis etwa 100°C, aufweisen und Hydroxylfunktionalität besitzen. Die Hydroxylfunktionalität des Harzes wird hier als Hydroxylzahl beschrieben, deren Wert die Anzahl Milligramm Kaliumhydroxyd angibt, welche die zur Acetylierung von einem Gramm Harz erforderliche Menge Essigsäureanhydrid neutralisiert. Die erfindungsgemässen Polyester besitzen Hydroxylzahlen von mindestens 50 und vorzugsweise von etwa 75 bis etwa 150 und werden in bekannter Weise durch die Kondensationsreaktion einer Dicarbonsäure oder deren Anhydrid oder Ester und einer Monocarbonsäure mit einer mehr als äquivalenten Menge eines aliphatischen Polyols mit mindestens drei
Hydroxymethylgruppen erhalten.    Als Dicarbonsäurekomponente kommt eine gesättigte oder ungesättigte
aliphatische, alicyclische oder aromatische Säure oder
deren Anhydrid oder Ester in Betracht, und vorzugsweise
ist dies Phthalsäureanhydrid, o-Phthalsäure, Terephthalsäure, Isophthalsäure oder Dimethylterephthalat.
Ueblicherweise macht die Dicarbonsäurekomponente weniger
als 50 Mol% der gesamten Säurekomponenten im Reaktionsprodukt aus.
Die Monocarbonsäurekomponente kann ebenfalls aliphatisch
oder aromatisch sein und ist vorzugsweise eine aromatische
Säure wie Benzoesäure, eine niederalkylsubstituierte
Benzoesäure und besonders bevorzugt eine para-substituierte Alkylbenzoesäure, worin die Alkylgruppe 1 bis 6 Kohlenstoffatome enthält.    Besonders bevorzugt ist p-t-Butylbenzoesäure.    Die aliphatischen Polyole sind Triole
oder höhere Polyole mit mindestens drei Hydroxymethylgruppen, und bevorzugt kommen Trimethyloläthan, Trimethylolpropan, Pentaerythrit, Dipentaerythrit oder Tripentaerythrit in Betracht.    Die Kondensationsreaktion
erfolgt vorzugsweise durch Erhitzen der Säure- und Alkoholkomponenten auf Temperaturen über etwa 150°C in Gegenwart
einer kleinen Menge eines sauren Katalysators wie einer
organischen Sulfonsäure oder eines basischen Katalysators
wie eines Metalloxyds, und die Reaktion wird fortgesetzt,
bis man ein Produkt mit einer verhältnismässig niedrigen
Säurezahl, üblicherweise unter etwa 15, erhält.    Die
Säurezahl des Harzes ist die zur Neutralisation von einem
Gramm Harz erforderliche Anzahl Milligramm Kaliumhydroxyd.

     Gegebenenfalls, und dies wird üblicherweise bevorzugt, kann die Zusammensetzung ferner eine kleine Menge
wie zum Beispiel etwa 1 bis 15 Gew.-% und vorzugsweise
etwa 3 bis etwa 10 Gew.-%, bezogen auf die Zusammensetzung, eines wasserunlöslichen, öllöslichen kationen-aktiven Tensids bzw. einer Tensidkombination enthalten, um
die Dispergierung des Pigments zu fördern.    Bevorzugte kationen-aktive Tenside sind substituierte tertiäre Amine, wobei es sich um heterocyclische tertiäre Amine
wie Alkylimidazoline und -oxazoline, um polyäthoxylierte
tertiäre Amine, primäre Amine wie Dehydroabietylamin und
N-Talg-trimethylendiamin und quartäre Ammoniumverbindungen wie die sich von Addukten aus $C_{12}$- bis $C_{18}$-Fettsäu-
reaminen und etwa 2 bis 15 Mol Aethylenoxyd ableitenden
quartären Ammoniumchloride handelt.    1-(2-Hydroxyäthyl)-2-n-heptadecenyl-2-imidazolin ist eines der bevorzugten Imidazoline.    Die kationen-aktiven Tenside sind
dazu fähig, mit verschiedenen Säuren wasserlösliche Salze
zu bilden und durch Umsetzung mit Alkali oder anionen-aktiven Tensiden in eine wasserunlösliche, öllösliche Form
umgewandelt zu werden.    In Form ihrer Essigsäuresalze
sind dies ausgezeichnete Tenside mit guter Wasserlöslichkeit.    Die wasserunlösliche, öllösliche Form solcher
Tenside wie zum Beispiel Komplexe der obigen Amintenside
mit anionen-aktiven Tensiden  ist ebenfalls brauchbar, vorausgesetzt, dass ein stöchiometrischer Ueberschuss wie
mindestens 10 % und vorzugsweise ein 10 bis 70 %-molarer
Ueberschuss des kationen-aktiven Tensids vorhanden ist.
Typische anionen-aktive Tenside umfassen Natriumoleat,
Natriumlaurat, Natriumpalmitat, Natriumstearat, Natriumnaphthenat, sulfoniertes Rizinusöl, sulfoniertes Petroleum, sulfoniertes Tallöl, Natrium-butylnaphthalinsulfonat, Holzharze und dergleichen.    Besonders nützlich
sind die handelsüblichen anionen-aktiven Tenside wie Tergitol 4 (das Natriumsulfatderivat von 7-Aethyl-2-methyl-
4-undecanol), Igepon AC-78 (der Kokosfettsäureester von
Natriumisäthionat), Aerosol 22 (das Tetranatriumsalz der
N-(1,2-Dicarboxyäthyl)-N-oct decyl-sulfosuccinamidsäure),
das Natriumsalz von hydriertem Holzharz und die Natriumalkylarylsulfonate.

Die Auswahl und die Menge des Tensids wird natürlich in Abhängigkeit von einer Anzahl Faktoren variieren,
wobei unter anderem der HLB-Wert des Tensids bzw. der
Tensidkombination und die Oberflächeneigenschaften des
Pigments in Betracht kommen.    Bei Vorhandensein eines Tensids wird dessen Menge im allgemeinen zwischen etwa
1 und etwa 15 Gew.-% und besonders bevorzugt zwischen etwa 3 und etwa 10 Gew.-% der Zusammensetzung liegen, und
die Menge wird so bemessen, dass das Harz/Tensidgewichtsverhältnis mindestens 2:1 beträgt und vorzugsweise im Bereich von etwa 2,5:1 bis etwa 6:1 liegt.

Die erfindungsgemässen Zusammensetzungen können
auf jegliche zweckmässige Art und Weise zur innigen Vermischung eines Pigments mit einem normalerweise festen
Harz hergestellt werden, zum Beispiel durch Kugelmahlung
im trockenen Zustand, Flintsteinmahlung in wässrigem
Medium, Schnellrühren in Gegenwart eines Lösungsmittels
für das Harz, und dergleichen und gegebenenfalls nachfolgende Entfernung des wässrigen Mediums oder Lösungsmittels. Zweckmässig werden die Zusammensetzungen dadurch hergestellt, dass man eine wässrige Dispersion des
Pigments bildet, vorzugsweise durch Einrühren des Pigments in Wasser in Gegenwart eines wasserlöslichen oder
wasserdispergierbaren kationen-aktiven oder anionen-aktiven Tensids, das in eine öllösliche, wasserunlösliche
Form umwandelbar ist, das Harz zur wässrigen Dispersion
gibt, die wässrige Pigment/Harzaufschlämmung bei einer
Temperatur oberhalb des Erweichungspunkts des Harzes,
üblicherweise etwa 5° bis etwa 35°C darüber, rührt, bis
das Pigment aus der wässrigen Phase in die Harzphase übergeht und sich eine im wesentlichen pigmentfreie Wasserphase bildet, die Temperatur der Aufschlämmung auf einen
Bereich einstellt, in dem das Harz fest ist, und das sich
so ergebende Produkt isoliert. Wird Granulat bevorzugt, wie es üblicherweise der Fall ist, wenn es sich um
feinverteilte Pigmente handelt, die ihrer Natur nach zum
Stauben neigen, so stellt man die Temperatur der Pigment/
Harzaufschlämmung während des Rührens auf einen Bereich
oberhalb des Erweichungspunkts des Harzes ein, wo sich eine
genügend hohe Harzviskosität ergibt, um eine gezielte
Koaleszenz der Teilchen und Granulierung im gewünschten
Teilchengrössenbereich zu erzielen, setzt Kühlwasser zu, um die Temperatur auf den gewünschten Bereich einzustellen, bzw. unterbricht die Erwärmung und lässt die Aufschlämmung langsam bis unter den Erweichungspunkt des Harzes abkühlen. Gegebenenfalls kann das Harz als Lösung in einem organischen Lösungsmittel zugesetzt und das Pigment, durch Ausfällung des Tensids oder Entfernung des Lösungsmittels, aus der wässrigen Phase in die Harzphase verdrängt werden, wobei sich eine farbige nicht-wässrige Phase in Form kleiner Pigmentgranulate bildet.

Die Isolierung des Produkts erfolgt in herkömmlicher Weise. Beispielsweise kann die Aufschlämmung zentrifugiert oder dadurch entwässert werden, dass man den Ansatz durch einen geeigneten Filterapparattyp wie eine Filterpresse, Sieb und dergleichen laufen lässt, und das teilweise entwässerte Produkt kann dann gewaschen und unter Verwendung von Pfannentrocknern, Vakuumtrocknern und dergleichen getrocknet werden. Die Isolierung kann zweckmässig auch durch Sprühtrocknen oder Walzentrocknen vorgenommen werden. Gewünschtenfalls kann man das Produkt vor oder nach dem Trocknen zu einer Pulverform zermahlen.

Die erfindungsgemässen feinteiligen Pigmentzusammensetzungen weisen ausserordentlich hohe Qualität und Einheitlichkeit auf, sind in Oelharzbindemittelsystemen leicht dispergierbar und liefern mit solchen Systemen Emaillacke, welche Filme oder Ueberzüge von ausgezeichneter Farbstärke, Glanz und Transparenz ergeben. Sie sind ideal geeignet zur Verwendung in technischen Oelharzbindemitteltypen wie herkömmlichen lufttrocknenden Alkydemaillacken, Alkyd/Melamin—einbrennemaillacktypen und heisshärtenden Acryl/Melaminemaillacktypen, wobei sie Filme oder Ueberzüge von ausgezeichnetem Glanz, ausgezeichneter Härte und Dauerhaftigkeit liefern.

Nach der allgemeinen Beschreibung der Erfindung sollen die nachfolgenden Beispiele spezielle Ausführungsformen der Erfindung erläutern. Soweit nicht anders angegeben sind Teile und Prozentangaben stets Gewichtsteile und Gewichtsprozente.

## Beispiel 1

Ein mit Rührer und Heizvorrichtung ausgerüstetes Gefäss beschickt man mit Hellchromgelbpigmentpresskuchen, der 224 Teile (Trockensubstanz) Pigment Yellow 34 (CI Nr. 77 603) enthält, und soviel Wasser, dass sich der erhaltene Ansatz auf 1660 Volumenteile beläuft. Der Rührer wird eingeschaltet und der Ansatz auf 55°C erwärmt, wonach man 9,6 Teile eines Kokosesters von Natriumisäthionat (0,023 anionen-aktives Tensidäquivalent), eine genügende Menge 5.%ige wässrige Natriumcarbonatlösung, um den pH der Aufschlämmung auf 7,0 zu stellen, und 72,0 Teile eines gepulverten aromatischen Polyesterharzes der Aufschlämmung zusetzt. Unter Aufrechterhaltung der Temperatur der Aufschlämmung bei 55°C wird 5 Minuten weitergerührt. Das Polyesterharz besass einen Erweichungspunkt (Ring- und Kugel-Methode) von etwa 82°C, eine Säurezahl von etwa 14 und eine Hydroxylzahl von etwa 110 und war durch die Kondensationsreaktion von 0,9 Mol o-Phthalsäureanhydrid und 2,3 Mol p-t-Butylbenzoesäure mit 1,7 Mol Trimethyloläthan hergestellt worden. Anschliessend gibt man 48,0 Teile einer wässrigen, 12,0 Teile Dehydroabietylamin (0,038 kationen-aktives Tensidäquivalent) enthaltenden Lösung und 2,4 Teile Eisessig dazu, stellt den pH der Aufschlämmung auf 6,5, erhitzt die Aufschlämmung auf 90°C und hält unter Rühren 2 Stunden bei 90° bis 95°C. Man versetzt mit Wasser bei 25°C, um das Volumen auf 3500 Teile einzustellen, und rührt die Aufschlämmung weitere 2 Minuten. Dann lässt man den Ansatz auf ein Sieb mit 0,42 mm Sieböffnung auslaufen und trocknet das entwässerte Material bei 70°C im Trockenschrank. Das Produkt besteht aus 235 Teilen (73,8 % Ausbeute) einer nichtklebrigen granulierten Pigmentzusammensetzung, die etwa 70,5 % Bleichromat, 22,7 % Polyesterharz und 6,8 % Tensidkombination, bezogen auf das Gewicht der Zusammensetzung, enthält. Das Granulat besteht aus staubfreien, im wesentlichen kugelförmigen, freifliessenden Teilchen, deren Mehrzahl einen Durchmesser zwischen etwa 1 und etwa 2 Millimeter aufweist.

Die Dispergierbarkeitseigenschaften der Pigmentzusammensetzung aus diesem Beispiel werden wie folgt in einem lufttrocknenden Alkydemaillack bewertet.      Eine gelbe Emaillackpastenformulierung wird dadurch hergestellt, dass man 170,2 Teile Granulat aus diesem Beispiel mit 47,2 Teilen eines handelsüblichen Alkydharzes mit mittlerem Soja/Leinölgehalt (Aroplaz 1445-M50) und 32,8 Teilen Lackbenzin unter Verwendung eines kleinen Cowles-Dispergierpropellers bei 5000 U.p.M. 15 Minuten lang verrührt, 306 Teile Sand (0,59-0,84 mm) dazugibt und noch 15 Minuten unter Verwendung eines Flügelrads vom Sandmühlentyp weiterrührt.      Nach Entfernung des Sands gibt die Paste eine Hegman-Skalenablesung über 7.      Aus der obigen Paste wird ein Emaillack dadurch hergestellt, dass man 68,6 Teile der Paste mit 54,9 Teilen Aroplazharz, 25,3 Teilen Lackbenzin, 1,0 Teilen Bleitrockenstoff und 0,2 Teilen Kobalttrockenstoff bis zur Einheitlichkeit verrührt und die Viskosität auf 20-25 Sekunden im Zahn-Becher Nr. 4 einstellt.      Der Emaillack wird dann auf Normprobetafeln (7,6 · 22,9 cm gross) zu einer Ueberzugsdicke von 0,018 mm gespritzt, und die Tafeln werden 48 Stunden bei Raumtemperatur getrocknet.      Die so erhaltenen Tafeln weisen eine glatte, glänzende, leuchtend gelbe Oberfläche auf.      Bei 24 Stunden Aufstellung in einem Cleveland-Feuchtigkeitsschrank bei 66°C erfolgt keine merkliche Aenderung der glatten, glänzenden Oberfläche der Tafeln.      Bei der Prüfung der Tafeln in einem Weatherometer ist die Farbe nach 100 Stunden eine Spur dunkler als auf einer unbehandelten Tafel und wird als völlig zufriedenstellend angesehen.

Die Pigmentzusammensetzung aus diesem Beispiel wird ferner in einem Alkyd/Melamin-einbrennemaillacktyp bewertet.      Bei dieser Bewertung stellt man im Dreiwalzenstuhl aus einem 62,8 Teile Granulat aus diesem Beispiel und 40,0 Teile eines handelsüblichen, nicht-oxidierbaren ölarmen Allzweckalkydharzes (Koppers Rezyl 99-5)
enthaltenden Gemisch in 3 Durchgängen eine gelbe Paste
her.        Eine Emaillack wird aus der obigen Paste dadurch
hergestellt, dass man 67,0 Teile der Paste mit 29,5 Teilen des Alkydharzes, 27,7 Teilen eines handelsüblichen,
schnellhärtenden Allzweck-Melamin/Formaldehydharztyps
(Koppers Melaminharz 61-8, 55 % Feststoffe) und 24,9
Teilen Xylol verrührt und die Viskosität mit Xylol auf
20 Sekunden im Fordbecher Nr. 4 einstellt.        Der Emaillack wird dann auf Probetafeln gespritzt, und die Tafeln
werden 30 Minuten bei 121°C eingebrannt.        Die so erhaltenen Tafeln weisen eine glatte, glänzende, leuchtend
gelbe Oberfläche auf, die einen Sward-Härteprüfwert von
48 ergibt.        Bei 24 Stunden Aufstellung in einem Cleveland-Feuchtigkeitsschrank bei 66°C erfolgt keine merkliche Aenderung der glatten, glänzenden Oberfläche der Tafeln.        Bei der Prüfung der Tafeln in einem Weatherometer ist die Farbe nach 100 Stunden eine Spur dunkler als
auf einer unbehandelten Tafel und wird als völlig zufriedenstellend angesehen.        Kontrolltafeln werden ebenfalls auf die gleiche Weise wie oben hergestellt, ausser
dass man die Paste unter Verwendung von 46 Teilen Pigment
Yellow 34 bildet und den Emaillack unter Verwendung von
56,1 Teilen Paste, 46,5 Teilen Alkydharz, 29,1 Teilen
Melaminharz und 17,4 Teilen Xylol, um einen Emaillack
vom gleichen Feststoffgehalt zu liefern, erzeugt.
Auswertung der Kontrolltafeln auf die gleiche Weise wie
oben zeigt, dass die Tafel glatt und glänzend ist, dass
der Sward-Härteprüfwert 20 beträgt und dass die Oberflächen- und Farbkenndaten sich bei den Feuchtigkeits- und
Weatherometerprüfungen nicht merklich ändern.

## Beispiel 2

Die Arbeitsweise des Beispiels 1 wird wiederholt
mit dem Unterschied, dass man den Hellchromgelbpigmentpresskuchen durch einen Molybdatorangepigmentpresskuchen,
der 224 Teile (Trockensubstanz) Pigment Red 104 (CI
Nr. 77605) enthält, ersetzt, 60,0 Teile Polyesterharz einsetzt und den pH-Endwert auf 6,0 einstellt. Das Produkt aus diesem Beispiel (91,6 % Ausbeute) liegt in Form eines staubfreien, freifliessenden Granulats vor, das 73,3 % des Orangepigments, 19,7 % des Polyesterharzes und 7,0 % der Tensidkombination enthält. Wenn man das Granulat in lufttrocknendem Alkydemaillack dispergiert und überzogene Tafeln daraus herstellt und auf die gleiche Weise wie in Beispiel 1 auswertet, weisen die Tafeln eine glatte, glänzende, leuchtende, rötlichorangefarbene Oberfläche auf, die sich bei der Feuchtigkeitsprüfung nicht merklich ändert und nach 200 Stunden Aufstellung im Weatherometer nur ein wenig dunkler ist.

Die Pigmentzusammensetzung aus diesem Beispiel wird ebenfalls in einem heisshärtenden Acryl/Melaminemaillacktyp wie folgt bewertet. Im Dreiwalzenstuhl stellt man aus einem 61,4 Teile Granulat aus diesem Beispiel und 22,5 Teile einer handelsüblichen Acrylharzlösung (Acryloid AT-56, 50 % Feststoffe) enthaltenden Gemisch in drei Durchgängen eine orangefarbene Paste her. Aus der obigen Paste wird ein Emaillack dadurch hergestellt, dass man 55,9 Teile der Paste mit 37,2 Teilen der Acrylharzlösung, 24,8 Teilen eines handelsüblichen Melamin/Formaldehydharztyps (Uformite MM-47, 60 % Feststoffe), 3,6 Teilen eines aromatischen Petroleumlösungsmittels (Solvesso 100), 4,9 Teilen Butanol und 19,6 Teilen Xylol verrührt und die Viskosität mit Xylol auf 20 Sekunden im Fordbecher Nr. 4 einstellt. Der Emaillack wird dann auf Probetafeln gespritzt und die Tafeln werden 30 Minuten auf 121°C erhitzt. Kontrolltafeln werden ebenfalls auf die gleiche Weise hergestellt, ausser dass man die Paste unter Verwendung von 45 Teilen Pigment Red 104 herstellt und den Emaillack unter Verwendung von 45 Teilen Paste, 57,6 Teilen Acrylharzlösung, 26,0 Teilen Melamin/Formaldehydharz, 3,6 Teilen aromatischem Petroleumlösungsmittel, 3,6 Teilen Butanol und 10 Teilen Xylol, um einen Emaillack mit gleichem Feststoffgehalt zu liefern, erzeugt. Ein visueller Vergleich der Probetafeln (mit dem die Pigment-

- 13 -

zusammensetzung aus diesem Beispiel enthaltenden Emaillack hergestellt) mit den Kontrolltafeln zeigt, dass die Probetafeln tiefer gefärbt und etwas weniger glänzend als die Kontrolltafeln sind. Der Sward-Härteprüfwert für die Probetafeln ist 44, gegenüber 28 für die Kontrolltafel.

### Beispiel 3

Ein mit Rührer und Heizvorrichtung ausgerüstetes Gefäss beschickt man mit 1600 Volumenteilen einer Aufschlämmung, die 85,5 Teile (Trockensubstanz) Copperphthalocyanin-Pigment-Green 7 (CI 74260) und Wasser enthält, schaltet den Rührer ein und erwärmt die Aufschlämmung auf 55°C. Anschliessend gibt man 38,0 Teile einer wässrigen Lösung, die 30 % des handelsüblichen anionenaktiven Tensids Alkanol WXN (ein Natrium-alkylarylsulfonat) enthält, dazu, stellt den pH mit verdünnter Essigsäure auf 6,0 ein und rührt 30 Minuten bei 55°C weiter. Dann gibt man 114,0 Teile des Polyesterharzes aus Beispiel 1 zu der Aufschlämmung, rührt 5 Minuten bei 55°C weiter, versetzt allmählich mit 80,8 Teilen einer wässrigen Lösung, die 10,1 Teile des handelsüblichen kationen-aktiven Tensids Duomeen T (N-Talg-trimethylendiamin) und 7,3 Teile 100 %ige Essigsäure enthält, und stellt den pH mit verdünnter Natriumcarbonatlösung auf 7,1. Die Aufschlämmung wird auf 90°C erhitzt und 2 Stunden bei 90-95°C gerührt, und danach wird kaltes Wasser zugesetzt, um das Volumen auf 3500 Teile zu bringen. Nach Auslaufen der Aufschlämmung auf ein Sieb mit 0,42 mm Sieböffnung und Trocknen des so erhaltenen Granulats besteht das Produkt aus diesem Beispiel aus 154 Teilen (70 % Ausbeute) eines freifliessenden, staubfreien Granulats, das 38,7 % Pigment, 51,7 Polyesterharz und 9,7 % Tensidkombination, bezogen auf das Gewicht des Produkts, enthält.

Die Dispergierbarkeitskenndaten der Pigmentzusammensetzung aus diesem Beispiel werden wie folgt in einem Vinyllack bewertet: Eine grüne Pastenformulierung wird dadurch hergestellt, dass man 21,4 Teile Granulat aus diesem Beispiel mit 75 Teilen einer Ueberzugslösung, die 35 % eines Vinylchlorid/-acetatcopolymeren (Gewichtsverhältnis 86:14), 32,5 % Xylol und 32,5 % Methyläthylketon
enthält, 30 Minuten unter Verwendung eines kleinen Cowles-
Dispergierpropellers bei 5000 U.p.M. verrührt und allmählich im Verlauf eines Zeitraums von 30 Minuten 33,5 Teile
eines Lösungsmittelgemischs aus Xylol und Methyläthylketon
(50:50) dazugibt.      Aus der obigen Paste wird ein Lack
dadurch hergestellt, dass man 43 Teile der Paste 30 Minuten mit 70,1 Teilen des Lösungsmittelgemischs und 2,6
Teilen Dioctylphthalat verrührt.      Der Lack gibt eine
Hegman-Skalenablesung von 7 ½ und zeigt bei mikroskopischer Untersuchung, dass die Dispersionsqualität hervorragend ist und dass die Grösse praktisch sämtlicher Pigmentteilchen unter 2 Mikron liegt.      Beim Ausziehen des
Lacks auf aluminiumbeschichtetem Papier zu einer Filmdikke von 0,038 mm weist der Film eine gute Farbintensität
auf und ist ausserordentlich leuchtend und transparent.

        Ein Kontrollack wird wie oben hergestellt mit dem
Unterschied, dass man die 21,4 Teile Granulat aus diesem
Beispiel durch 8,3 Teile eines handelsüblichen Pigment
Green 7-Toners und 13,1 Teile des Polyesters aus Beispiel 1
ersetzt.      Der Kontrollack gibt eine Hegman-Skalenablesung von 6 und zeigt bei mikroskopischer Untersuchung eine
sehr grosse Anzahl von Teilchen im Grössenbereich 10-25
Mikron.      Der Abstrich auf Aluminium besitzt eine Farbintensität, die dem des Testlacks weitgehend gleich ist,
aber er ist erheblich weniger leuchtend und weniger
transparent.

- 15 -

Ansprüche:

1. Feste, feinteilige Pigmentzusammensetzung, die in Oelharzbindemittelsystemen leicht dispergierbar ist, dadurch gekennzeichnet, dass sie aus 25 bis 95 Gew.-% mindestens eines Pigments und aus 5 bis 75 Gew.-% mindestens eines wasserunlöslichen, zerreibbaren thermoplastischen Polyesterharzes mit einer Hydroxylzahl von mindestens 50 mg KOH/Gramm Harz und einem Ring- und Kugel-Erweichungspunkt von mindestens 60°C besteht.

2. Zusammensetzung nach Anspruch 1 in Form eines staubarmen Granulats.

3. Zusammensetzung nach Anspruch 1, dadurch gekennzeichnet, dass als Polyesterharz ein Kondensationsprodukt einer aromatischen Dicarbonsäure oder deren Anhydrid oder Ester, einer aromatischen Monocarbonsäure und eines aliphatischen Polyols mit mindestens drei Hydroxymethylgruppen vorliegt.

4. Zusammensetzung nach Anspruch 1, dadurch gekennzeichnet, dass das Polyesterharz eine Hydroxylzahl von 75 bis 150 aufweist.

5. Zusammensetzung nach Anspruch 1, dadurch gekennzeichnet, dass sie ferner etwa 1 bis etwa 15 % eines kationen-aktiven Tensids bzw. Tensidkombination enthält.

6. Zusammensetzung nach Anspruch 1, dadurch gekennzeichnet, dass als Polyester das Kondensationsprodukt aus Phthalsäureanhydrid, p-t-Butylbenzoesäure und Trimethyloläthan vorliegt.

7. Zusammensetzung nach Anspruch 1, dadurch gekennzeichnet, dass als Pigment ein anorganisches Pigment vorliegt.

8. Zusammensetzung nach Anspruch 7, dadurch gekennzeichnet, dass als Pigment ein Bleichromat-haltiges Pigment vorliegt.

9. Zusammensetzung nach Anspruch 1, dadurch gekennzeichnet, dass als Pigment ein organisches Pigment vorliegt.

10.     Zusammensetzung nach Anspruch 9, dadurch gekennzeichnet, dass als Pigment ein Kupferphthalocyaninpigment
vorliegt.

| EINSCHLÄGIGE DOKUMENTE | | | KLASSIFIKATION DER ANMELDUNG (Int.Cl 3) |
| --- | --- | --- | --- |
| Kategorie | Kennzeichnung des Dokuments mit Angabe, soweit erforderlich, der maßgeblichen Teile | betrifft Anspruch | C 08 L 67/00 C 08 J 3/22 |
| | CH - A - 606 198 (VYZKUMNY) * Ansprüche I,II * -- | 1,2 | |
| | FR - A - 2 197 935 (CIBA) * Ansprüche 1-5 * -- | 1,2,7, 9,10 | |
| | FR - A - 921 975 (I.C.I.) * Ansprüche I,II * -- | 1,7-10 | RECHERCHIERTE SACHGEBIETE (Int. Cl 3) |
| | GB - A - 1 391 926 (MITSUBISHI) * Ansprüche 1-6 * -- | 1,2,7-10 | C 08 L 67/00 3/22 |
| | FR - A - 2 252 387 (HERCULES) * Ansprüche 1-10 * -- | 1,2,9 | |
| | US - A - 3 755 244 (W.J. HART) * Anspruch 1 * -- | 1 | |
| | US - A - 4 127 421 (FERRILL) * Ansprüche 1-10 * -- | 1 | KATEGORIE DER GENANNTEN DOKUMENTE X: von besonderer Bedeutung A: technologischer Hintergrund O: nichtschriftliche Offenbarung P: Zwischenliteratur T: der Erfindung zugrunde liegende Theorien oder Grundsätze E: kollidierende Anmeldung D: in der Anmeldung angeführtes Dokument L: aus andern Gründen angeführtes Dokument |
| | US - A - 3 778 287 (J. FREDERICK STANSFIELD AND A. TOPHAM) * Ansprüche 1-8 * -- ./. | 1 | |
| X | Der vorliegende Recherchenbericht wurde für alle Patentansprüche erstellt. | | &: Mitglied der gleichen Patent- familie, übereinstimmendes Dokument |
| Recherchenort Den Haag | Abschlußdatum der Recherche 12-03-1980 | | Prüfer DECOCKER |

EPA form 1503.1 06.78

| | EINSCHLÄGIGE DOKUMENTE | | | KLASSIFIKATION DER ANMELDUNG (Int.Cl. 3) |
|---|---|---|---|---|
| Kategorie | Kennzeichnung des Dokuments mit Angabe, soweit erforderlich, der maßgeblichen Teile | betrifft Anspruch | | |
| | DE - A - 2 540 355 (CIBA) <br> * Ansprüche 1-15; Seite 3, Zeilen 22-27 * <br><br> ---- | 1-3,7- 10 | | |
| | | | | **RECHERCHIERTE SACHGEBIETE (Int. Cl. 3)** |